# EUROPÄISCHE PATENTSCHRIFT

(11) **EP 0 306 780 B1**
(45) Veröffentlichungstag und Bekanntmachung des Hinweises auf die Patenterteilung: **10.02.1993**
(21) Anmeldenummer: 88113928.1
(22) Anmeldetag: 26.08.1988
(51) Int. Cl.: F16H 47/02, B60K 17/04

(54) **Triebwerk für Nutzfahrzeuge**
Drive unit for commercial vehicles
Unité de propulsion pour véhicules commerciaux

(30) Priorität: 09.09.1987 DE 3730196
(43) Veröffentlichungstag der Anmeldung: 15.03.1989
(73) Patentinhaber: Xaver Fendt & Co., D-87609 Marktoberdorf (DE)
(72) Erfinder: Pedersen, Alex, DK-7200 Grindsted (DK); Dziuba, Peter, D-8951 Lengenwang (DE); Reisch, Johann, D-8952 Marktoberdorf (DE)

(56) Entgegenhaltungen:
- DE-B- 2 160 243
- FR-A- 2 381 218
- US-A- 2 962 915
- US-A- 4 581 949

## Beschreibung

Die Erfindung betrifft ein Triebwerk für Nutzfahrzeuge, insbesondere Ackerschlepper, mit einem mechanischen Fahrantrieb für zwei Fahrtrichtungen bestehend aus einer Brennkraftmaschine, einer im Leistungsfluß zu den angetriebenen Rädern angeordneten Fahrkupplung und einem der Fahrkupplung nachgeschalteten mehrstufigen Schaltgetriebe mit einer eine Vielzahl die verschiedenen Fahrgeschwindigkeitsstufen mitbildenden Zahnräder tragenden Eingangswelle und einer Ausgangswelle, und mit einem hydrostatischen Fahrantrieb bestehend aus einer unter Umgehung der Fahrkupplung angetriebenen Hydraulikpumpe und einem von der Hydraulikpumpe angetriebenen Hydraulikmotor, wobei die Ausgangswelle des Schaltgetriebes in mehreren Fahrgeschwindigkeitsstufen wahlweise über die Fahrkupplung oder den Hydraulikmotor antreibbar ist.

Ein Triebwerk mit den wesentlichen o. g. Merkmalen geht aus der DE-A-21 60 243 hervor. Bei dem bekannten Triebwerk erfolgt der hydraulische Antrieb der Ausgangswelle des Schaltgetriebes wahlweise über eine von zwei zusätzlichen, auf einer Nebenwelle angeordneten Kupplungen, weshalb für jede der gewünschten Fahrgeschwindigkeitsstufen in einem solchen Fall eine zusätzliche Kupplung erforderlich ist. Dies führt insbesondere dann, wenn neben den gegebenen mechanischen Fahrgeschwindigkeitsstufen auch eine größere Anzahl hydraulischer Fahrgeschwindigkeitsstufen erwünscht sind, zu Unterbringungsschwierigkeiten. Die Anzahl möglicher hydraulischer Fahrgeschwindigkeitsstufen ist also bei dem bekannten Triebwerk sehr begrenzt. Zudem besteht ein auffallendes Mißverhältnis zwischen den angebotenen mechanischen Fahrgeschwindigkeitsstufen und den gleichzeitig angebotenen hydraulischen Fahrgeschwindigkeitsstufen insbesondere, wenn man bedenkt, daß derzeit Schleppergetriebe mit 12 Fahrgeschwindigkeitsstufen die Regel sind und Getriebe mit bis zu 16 Fahrgeschwindigkeitsstufen und mehr keine Ungewöhnlichkeit darstellen.

Getriebe mit einer derart großen Anzahl Fahrgeschwindigkeitsstufen sind üblicherweise aus mehreren aufeinander abgestimmten Getrieben zusammengesetzt. Für landwirtschaftliche Zwecke hat es sich als zweckmäßig erwiesen, neben dem eigentlichen Schaltgetriebe ein Gruppengetriebe vorzusehen, mit dem ein bestimmter Teil des gesamten zur Verfügung stehenden Fahrgeschwindigkeitsbereiches beim Durchschalten des Schaltgetriebes bestrichen werden kann. Außerdem sind sog. Feinstufengetriebe im Einsatz, die es dem Fahrer des Fahrzeuges ermöglichen, ausgehend von einer bestimmten mittleren Fahrgeschwindigkeitsstufe durch einen einfachen Handgriff eine Fahrgeschwindigkeitsstufe anzuwählen, die entweder eine etwas höhere Fahrgeschwindigkeit erlaubt oder eine größere Zugkraft zur Verfügung stellt.

Ein gattungsähnliches Triebwerk ist auch in der FR-A 2 381 218 offenbart. Dort ist zwischen der Brennkraftmaschine mit Fahrkupplung und dem Schaltgetriebe im Kraftfluß zu den Rädern ein Verteilergetriebe vorgesehen, das zum Antrieb des Schaltgetriebes wahlweise den von der Hydraulikpumpe angetriebenen Hydraulikmotor oder die Brennkraftmaschine einschalten kann. Dadurch, daß die Hydraulikpumpe nicht unter Umgehung der Fahrkupplung angetrieben ist, sondern das Verteilergetriebe im Leistungsfluß zur Hydraulikpumpe und vom Hydraulikmotor liegt, verschlechtert sich die Schaltbarkeit eines nachgeordneten, synchronisierten Schaltgetriebes. Ursache hierfür sind zusätzliche rotierende Massen im Verteilergetriebe, die von der zusätzlich erforderlichen Ausgangs- und Eingangswelle oder evtl. vorgesehenen Abschaltkupplungen zur Abkoppelung von Hydraulikpumpe und Hydraulikmotor vom Verteilergetriebe herrühren und bei einem Gangwechsel von den Synchronisierungen im Schaltgetriebe beschleunigt oder verzögert werden müssen.

Von dem aufgezeigten Stand der Technik ausgehend besteht die Aufgabe der vorliegenden Erfindung darin, ein Triebwerk der eingangs beschriebenen Art dahingehend zu verbessern, daß ohne wesentlichen technischen Mehraufwand und ohne zusätzlichen Platzbedarf im Schaltgetriebe die Anzahl der hydraulischen Fahrgeschwindigkeitsstufen in einem sinnvollen Ausmaß erhöht werden kann.

Zur Lösung dieser Aufgabe ist eines der an der Bildung der Fahrgeschwindigkeitsstufen des Schaltgetriebes beteiligten Zahnräder ständig drehfest mit der Eingangswelle verbunden und stellt das Eingangsrad für den hydraulischen Leistungsfluß vom Hydraulikmotor in das Schaltgetriebe dar.

Die Erfindung ermöglicht es, sämtliche Fahrgeschwindigkeitsstufen des Schaltgetriebes in den Leistungsfluß vom Hydraulikmotor zu den angetriebenen Rädern einzufügen und so entsprechend der Anzahl der Fahrgeschwindigkeitsstufen des Schaltgetriebes die zur Verfügung stehenden hydraulischen Fahrgeschwindigkeitsstufen wesentlich zu erhöhen. Hierfür sind praktisch keinerlei zusätzliche Schaltmittel erforderlich. Auch ist es auf diese Weise möglich, das Fahrzeug im Zuge einer Nachrüstung ohne aufwendigen Antriebsumbau mit hydraulischen Fahrgeschwindigkeitsstufen nachzurüsten.

Durch das Merkmal des Anspruches 2 ist bei beabsichtigter Rückwärtsfahrt eine Fehlbedienung der Getriebeschaltung unmöglich, denn in diesem Fall erfolgt die Drehrichtungsumkehr der Ausgangswelle des Schaltgetriebes bereits durch die entsprechende Verstellung der Hydraulikpumpe. Eine versehentliche Betätigung der Rückwärtsstufe des Feinstufengetriebes bleibt ohne Wirkung.

Die Erfindung wird im folgenden anhand einer Zeichnung, die eine schematisches Schleppertriebwerk darstellt, näher erläutert.

Das gezeigte Triebwerk besitzt als Antriebsmotor 1 eine Verbrennungskraftmaschine, der in üblicher Weise eine Fahrkupplung 2, ein zweistufiges Feinstufengetriebe 3 mit Rückwärtsstufe R und ein 6-stufiges Schaltgetriebe 4 im Kraftfluß zu einem Differentialgetriebe 5, das die Antriebsleistung auf die angetriebenen Hinterräder 6 verteilt, nachgeordnet ist.

Zur Bildung der sechs Fahrgeschwindigkeitsstufen I; II; III; IV; V; VI des Schaltgetriebes 4 trägt deren Eingangswelle 7 sechs Zahnräder, die mit gegenüberliegenden Zahnrädern auf der Ausgangswelle 8 kämmen. Zwischen jeweils zwei dieser benachbarten Zahnradpaare befindet sich eine Schaltkupplung 9, 10, 11, wobei auf der Eingangswelle 7 die Schaltkupplung 10 angeordnet ist. Die anderen, nicht mit der Schaltkupplung 10 zusammenarbeitenden Zahnräder auf der Eingangswelle 7 sind mit dieser ständig drehfest verbunden. Eines der ständig mit der Eingangswelle 7 drehfest verbundenen Zahnräder ist über mehrere weitere Zahnräder 12,13 von einem auf der Abtriebswelle 15 eines Hydraulikmotors 16 drehbar gelagerten und über eine Kupplung 17 mit dieser verbindbaren Zahnrad 18 antreibbar. Die Steuereinrichtung 19 für die Kupplung 17 steht mit einer zwischen der Ausgangswelle 3a des Feinstufengetriebes 3 und der Eingangswelle 7 des Schaltgetriebes 4 angeordneten Kupplung 20 derart in Verbindung, daß beim Einrücken der einen Kupplung 17, 20 die andere 20,17 ausgerückt wird und umgekehrt. Der Hydraulikmotor 16 wird von einer in beiden Richtungen verstellbaren Hydraulikpumpe 21 gespeist, die über ebenfalls eine Kupplung 22 direkt vom Antriebsmotor 1 angetrieben wird.

Zur Benutzung des gezeigten Triebwerks in herkömmlichem Sinne wird die Kupplung 22 geöffnet und mittels der Steuereinrichtung 19 die Kupplung 17 gelöst und gleichzeitig die Kupplung 20 geschlossen. Der Leistungsfluß vom Antriebsmotor 1 kann nunmehr ungehindert über das Feinstufengetriebe 3, die Kupplung 20 und die jeweils geschaltete Fahrgeschwindigkeitsstufe I - VI des Schaltgetriebes 4 zu den Hinterrädern 6 fließen.

Sollen mit dem Fahrzeug Arbeiten mit sehr geringer Fahrgeschwindigkeit ausgeführt werden , so wird die Kupplung 22 geschlossen sowie über die Steuereinrichtung die Kupplung 20 geöffnet und gleichzeitig die Kupplung 17 geschlossen. Damit ist der mechanische Leistungsfluß zu den Hinterrädern 6 unterbunden. Anstelle der mechanischen Leistung fließt nunmehr über den Hydraulikmotor 16 und die Zahnräder 18,13,12 hydraulische Leistung in das Schaltgetriebe 4, wo in üblicher Weise die gewünschte Fahrgeschwindigkeit durch Schalten einer geeigneten Geschwindigkeitsstufe I - VI vorgegeben wird. Durch Änderung der Förderrichtung der Hydraulikpumpe 21 ist es dabei möglich, die Fahrtrichtung umzukehren.

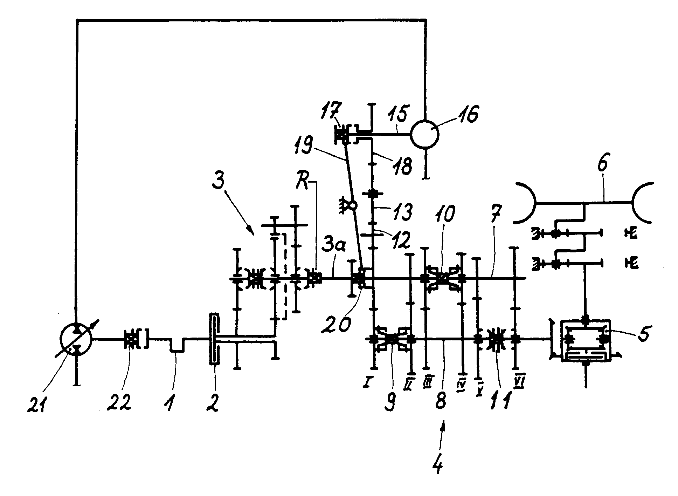

## Patentansprüche

1. Triebwerk für Nutzfahrzeuge, insbesondere Ackerschlepper, mit einem mechanischen Fahrantrieb für zwei Fahrtrichtungen bestehend aus einer Brennkraftmaschine, einer im Leistungsfluß zu den angetriebenen Rädern angeordneten Fahrkupplung (2) und einem der Fahrkupplung (2) nachgeschalteten mehrstufigen Schaltgetriebe (4) mit einer eine Vielzahl die verschiedenen Fahrgeschwindigkeitsstufen mitbildenden Zahnräder tragenden Eingangswelle (7) und einer Ausgangswelle (8), und mit einem hydrostatischen Fahrantrieb bestehend aus einer unter Umgehung der Fahrkupplung (2) angetriebenen Hydraulikpumpe (21) und einem von der Hydraulikpumpe (21) angetriebenen Hydraulikmotor (16), wobei die Ausgangswelle (8) des Schaltgetriebes (4) in mehreren Fahrgeschwindigkeitsstufen wahlweise über die Fahrkupplung (2) oder den Hydraulikmotor (16) antreibbar ist,
**dadurch gekennzeichnet,**
daß eines der an der Bildung der Fahrgeschwindigkeitsstufen (I - VI) des Schaltgetriebes (4) beteiligten Zahnräder ständig drehfest mit der Eingangswelle (7) verbunden ist und das Eingangsrad für den hydraulischen Leistungsfluß vom Hydraulikmotor (16) in das Schaltgetriebe (4) darstellt.

2. Triebwerk nach Anspruch 1,
**dadurch gekennzeichnet,**
daß ein vorgesehenes zusätzliches Getriebe wie Gruppen- und/oder Feinstufengetriebe (3) im Leistungsfluß vor dem Schaltgetriebe (4) angeordnet ist und eine Rückwärtsstufe (R) enthält.

## Claims

1. Motive power system for utility vehicles, especially agricultural tractors, this motive power system comprising a mechanical traction drive for propelling the vehicle in either direction and consisting of an internal combustion engine, a clutch (2) which can be utilized in driving the vehicle and is located in the power flow to the driven wheels, and a multi-ratio speed-changing gear transmission (4) with an input shaft (7) carrying a plurality of gearwheels which participate in forming the speed ratios appropriate to different vehicle speeds, and with an output shaft (8), said gear transmission (4) being located downline of the clutch (2), said motive power system further comprising a hydrostatic traction drive consisting of a hydraulic pump (21) driven by means bypassing the clutch (2), and a hydraulic motor (16) driven by the hydraulic pump (21), the output shaft (8) of the speed-changing gear transmission (4) being drivable at several speed ratios, with corresponding vehicle speeds, either via the clutch (2) or through the agency of the hydraulic motor (16), according to what is selected, characterized in that one of the gearwheels which participate in forming the speed ratios (I - VI) of the speed-changing gear transmission (4), with corresponding vehicle speeds, is permanently connected to the input shaft (7) in a manner such that it cannot rotate relative thereto, and constitutes the input wheel for the hydraulic power flow from the hydraulic motor (16) into said gear transmission (4).

2. Motive power system according to Claim 1, characterized in that an additional gear transmission assembly which is provided, such as a group gear assembly or a close-ratio gear assembly (3), is located in the power flow upline of the speed-changing gear transmission (4), and contains a reverse-ratio gearset (R).

## Revendications

1. Unité de propulsion pour des véhicules utilitaires, notamment des tracteurs agricoles, avec un entraînement mécanique pour deux sens de marche constitué par un moteur à combustion interne, un embrayage (2) disposé dans le flux de puissance vers les roues entraînées, et une boîte de vitesses (4) branchée à la suite avec un arbre d'entrée (7) portant une pluralité de roues dentées formant ensemble les différents étages de vitesses, et un arbre de sortie (8), et avec un entraînement hydraulique et un arbre de sortie (8), et avec un entraînement hydraulique constitué par une pompe hydraulique (21) entraînée sans passer par l'embrayage (2) et un moteur hydraulique (16) entraîné par cette pompe hydraulique (21), tandis que l'arbre de sortie (8) de la boîte de vitesses (4) est susceptible d'être entraîné, dans plusieurs étages de vitesses de marche, soit par l'intermédiaire de l'embrayage (2), soit par le moteur hydraulique (16), unité de propulsion caractérisée en ce qu'une des roues dentées participant à la formation des étages de vitesses (I à VI) de la boîte de vitesses (4) est constamment solidaire de l'arbre d'entrée (7) et constitue la roue d'entrée dans la boîte de vitesses (4) du flux de puissance hydraulique en provenance du moteur hydraulique (16).

2. Unité de propulsion selon la revendication 1, caractérisée en ce qu une transmission intermédiaire prévue en supplément, telle que train d'engrenages ou boîte de vitesses à échelonnement fin (3), est disposée dans le flux de puissance en amont de la boîte de vitesses (4) et comprend un étage de marche arrière (R).
